# EUROPEAN PATENT APPLICATION

(11) **EP 4 485 195 A1**
(43) Date of publication of application: **01.01.2025**
(21) Application number: 23755822.6
(22) Date of filing: 16.02.2023
(51) Int. Cl.: G06F 9/48, G06F 9/50, G06F 9/54, G06Q 10/06, G06Q 50/06

(54) **METHOD AND SYSTEM FOR PROCESSING COMPUTING TASK**

(30) Priority: 21.02.2022 CN 202210158681
(71) Applicant: Alibaba Innovation Private Limited, Singapore 189554 (SG)
(72) Inventor: ZHAO, Liang, Hangzhou, Zhejiang 310030 (CN); HUANG, Kuoling, Bellevue (US); YIN, Wotao, Hangzhou, Zhejiang 311121 (CN)
(74) Representative: Finnegan Europe LLP
(86) International application number: PCT/CN2023/076325
(87) International publication number: WO 2023/155820

(57) **Abstract**

Disclosed are a method and system for processing a computing task. The method includes: acquiring a target computing task, where the target computing task is used for solving a target problem; identifying the target computing task to determine problem structure information of the target problem; determining a processing mode of the target computing task based on the problem structure information; and acquiring a computed result of the target computing task according to the processing mode. The present invention solves the technical problem in the prior art that a method of fixing a processing mode of a solver to local solving or remote solving is poor in flexibility of a solving process.

## Description

The present application claims priority to Chinese Patent Application No. 202210158681.9, entitled "METHOD AND SYSTEM FOR PROCESSING COMPUTING TASK" filed with the China National Intellectual Property Administration on February 21, 2022, which is incorporated by reference in its entirety.

### TECHNICAL FIELD

The present invention relates to the field of the computer technology, specifically to a method and system for processing a computing task.

### BACKGROUND

A solver is software for solving a numerical computing task and is widely used in technical fields such as cloud computing, finance, transportation, manufacturing and energy. In the prior art, the solver may select a processing mode of local solving or remote solving during running.

For a solver performing local solving, the advantage is that the solver performs solving directly on a local device without the need for data transmission. The defect is that the performance of the local device is limited, which may lead to relatively slow solving of large-scale and difficult problems.

For a solver performing solving on a remote server, by means of a client and server architecture, a model file and a parameter file are sent to the remote server, and then, a computed result returned from the remote server is received. The advantage is that the remote computing server has good performance and strong computing capability. The defect is that for simple problems that are easy to solve, the data transmission process may result in a longer total time of remote solving than local solving.

Therefore, how to integrate the advantages of local solving and remote solving to improve the flexibility of the solving process of the solver has become one of the important issues in the art. For the above problem, no effective solution has been proposed yet.

### SUMMARY

Embodiments of the present invention provide a method and system for processing a computing task to at least solve the technical problem in the prior art that a method of fixing a processing mode of a solver to local solving or remote solving is poor in flexibility of a solving process.

According to one aspect of the embodiments of the present invention, a method for processing a computing task is provided. The method includes: acquiring a target computing task, where the target computing task is used for solving a target problem; identifying the target computing task, to determine problem structure information of the target problem; determining a processing mode of the target computing task based on the problem structure information; and acquiring a computed result of the target computing task according to the processing mode.

According to another aspect of the embodiments of the present invention, a method for processing a computing task is also provided. The method includes: acquiring an e-commerce traffic allocation task, where the e-commerce traffic allocation task is used for solving an e-commerce traffic allocation problem; identifying the e-commerce traffic allocation task, and determining problem structure information of the e-commerce traffic allocation problem; determining a processing mode of the e-commerce traffic allocation task based on the problem structure information; and acquiring an e-commerce traffic allocation result of the e-commerce traffic allocation task according to the processing mode.

According to still another aspect of the embodiments of the present invention, a method for processing a computing task is also provided. The method includes: acquiring a power dispatching task, where the power dispatching task is used for solving a power dispatching problem; identifying the power dispatching task to determine problem structure information of the power dispatching problem; determining a processing mode of the power dispatching task based on the problem structure information; and acquiring a power dispatching result of the power dispatching task according to the processing mode.

According to yet another aspect of the embodiments of the present invention, a computer-readable storage medium is also provided. The above computer-readable storage medium includes a stored program, where when the above program runs, a device in which the above computer-readable storage medium is located is controlled to execute any one of the above methods for processing a computing task.

According to still yet another aspect of the embodiments of the present invention, a processor is also provided. The above processor is configured to enable a program to run, where when the above program runs, any one of the above methods for processing a computing task is executed.

According to a further aspect of the embodiments of the present invention, a system for processing a computing task is also provided. The system includes: a processor, and a memory connected to the above processor and configured to provide instructions for the above processor to process the following processing steps: acquiring a target computing task, where the target computing task is used for solving a target problem; identifying the target computing task, and determining problem structure information of the target problem; determining a processing mode of the target computing task based on the problem structure information; and acquiring a computed result of the target computing task according to the processing mode.

In this embodiment of the present invention, first, a target computing task is acquired, where the target computing task is used for solving a target problem; problem structure information of the target problem is determined by identifying the target computing task; a method of determining a processing mode of the target computing task based on the problem structure information is used; and a computed result of the target computing task is acquired according to the processing mode.

It is easy to notice that through this embodiment of the present application, the target computing task is identified and the problem structure information of the target problem is acquired, thereby determining the processing mode of the target computing task. The processing mode may be local solving, remote solving or simultaneous solving. As a result, the purpose of enabling the solver to automatically select a processing mode according to the problem structure information of the target problem is achieved to realize the technical effects of integrating the advantages of local solving and remote solving and improving the flexibility of the solving process of the solver, thereby solving the technical problem in the prior art that a method of fixing a processing mode of a solver to local solving or remote solving is poor in flexibility of a solving process.

### BRIEF DESCRIPTION OF THE DRAWINGS

The accompanying drawings described here are intended to provide a further understanding of the present invention, and constitute a part of the present invention. Illustrative embodiments of the present invention and descriptions thereof are intended to explain the present invention, and do not constitute an improper limitation on the present invention. In the accompanying drawings:
FIG. 1 shows a block diagram of hardware structures of a computer terminal (or a mobile device) for implementing a method for processing a computing task;
FIG. 2 is a flowchart of a method for processing a computing task according to an embodiment of the present invention;
FIG. 3 is a schematic diagram of an optional process for processing a computing task according to an embodiment of the present invention;
FIG. 4 is a flowchart of another method for processing a computing task according to an embodiment of the present invention;
FIG. 5 is a flowchart of still another method for processing a computing task according to an embodiment of the present invention;
FIG. 6 is a schematic structural diagram of an apparatus for processing a computing task according to an embodiment of the present invention;
FIG. 7 is a schematic structural diagram of another apparatus for processing a computing task according to an embodiment of the present invention;
FIG. 8 is a schematic structural diagram of still another apparatus for processing a computing task according to an embodiment of the present invention;
FIG. 9 is a schematic structural diagram of yet another apparatus for processing a computing task according to an embodiment of the present invention; and
FIG. 10 is a structural block diagram of another computer terminal according to an embodiment of the present invention.

### DETAILED DESCRIPTION

In order to enable those skilled in the art to better understand the solutions in the present invention, the technical solutions in the embodiments of the present invention will be described clearly and completely with reference to the accompanying drawings in the embodiments of the present invention. It is apparent that the described embodiments are merely some of rather than all the embodiments of the present invention. Based on the embodiments of the present invention, all other embodiments derived by those of ordinary skill in the art without any creative effort shall fall within the protection scope of the present invention.

It is to be noted that the terms such as "first" and "second" in the specification, claims and above accompanying drawings of the present invention are intended to distinguish similar objects rather than describe a particular sequence or a precedence order. It is to be understood that the data used in this way can be interchanged under appropriate conditions, so that the embodiments of the present invention described herein can be implemented in a sequence other than those illustrated or described herein. In addition, the terms "include" and "have" and any variations thereof are intended to cover non-exclusive inclusion. For example, a process, method, system, product, or device that includes a series of steps or units is not necessarily limited to those steps or units that are clearly listed, but may include other steps or units not clearly listed or inherent to such process, method, product, or device.

First, some nouns or terms used in descriptions of the embodiments of the present invention are explained below.

Optimization solver: It is a numerical computing software for solving optimization problems.

SolveProblem: It is an application programming interface (API) used by a solver to execute a local solving command.

SubmitTask: It is an API used by a client to submit a computing operation during remote solving.

RetrieveTask: It is an API used by a client to acquire a computed result from a remote computing server during remote solving.

### Embodiment 1

According to an embodiment of the present invention, a method for processing a computing task is also provided. It is to be noted that the steps shown in the flowchart of the accompanying drawing may be executed in a computer system such as a set of computer executable instructions. Moreover, although a logical order is shown in the flowchart, in some cases, the steps shown or described may be executed in an order different from the order here.

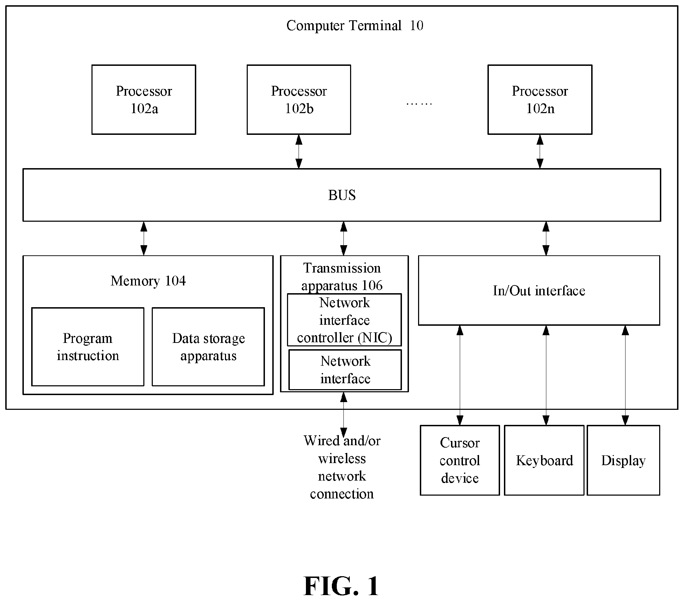

The method provided in Embodiment 1 of the present application may be executed in a mobile terminal, a computer terminal or a similar arithmetic apparatus. FIG. 1 shows a block diagram of hardware structures of a computer terminal (or a mobile device) for implementing a method for processing a computing task. As shown in FIG. 1, a computer terminal 10 (or a mobile device 10) may include one or a plurality of processors 102 (shown as 102a, 102b, ..., 102n in the figure, and the processor 102 may include, but is not limited to, processing apparatuses such as a microcontroller unit (MCU) or a field programmable gate array (FPGA), a memory 104 for storing data, and a transmission apparatus 106 with a communication function. In addition, the computer terminal 10 (or the mobile device 10) may further include a display, an input/output interface (I/O interface), a universal serial bus (USB) port (which may be included as one of the ports of a BUS), a network interface, a power supply and/or a camera. Those of ordinary skill in the art can understand that the structure shown in FIG. 1 is only schematic, and does not limit the structure of the above electronic apparatus. For example, the computer terminal 10 may further include more or less components than those shown in FIG. 1, or has configurations different from those shown in FIG. 1.

It is to be noted that one or a plurality of processors 102 and/or other data processing circuits mentioned above may be usually referred to as a "data processing circuit" herein. The data processing circuit may be completely or partially embodied as software, hardware, firmware or any other combination. In addition, the data processing circuit may be a single independent processing module, or may be completely or partially combined into any one of the other elements in the computer terminal 10 (or the mobile device). As involved in the embodiment of the present invention, the data processing circuit serves as a processor control (such as selection of a variable resistance terminal path connected with an interface).

The memory 104 can be configured to store software programs and modules of application software, such as program instructions/data storage apparatuses corresponding to the method for processing a computing task in the embodiment of the present invention. The processor 102 executes various functional applications and data processing by running the software programs and modules stored in the memory 104, thereby implementing the above method for processing a computing task. The memory 104 may include a high-speed random access memory and may also include a non-volatile memory, such as one or a plurality of magnetic storage apparatuses, flash memories or other non-volatile solid-state memories. In some examples, the memory 104 may further include memories remotely arranged relative to the processor 102, and the remote memories may be connected to the computer terminal 10 through a network. The examples of the above network include but are not limited to the Internet, Intranet, local area networks, mobile communication networks, and combinations thereof.

The transmission apparatus 106 is configured to receive or send data through a network. A specific example of the above network may include a wireless network provided by a communication supplier of the computer terminal 10. In an example, the transmission apparatus 106 includes a network interface controller (NIC), and the NIC can be connected with other network devices through a base station so as to communicate with the Internet. In an example, the transmission apparatus 106 may be a radio frequency (RF) module and is configured to communicate with the Internet in a wireless mode.

The display may be a touch screen type liquid crystal display (LCD). The LCD can enable a user to interact with a user interface of the computer terminal 10 (or the mobile device).

Here, it is to be noted that in some optional embodiments, the computer device (or the mobile device) shown in FIG. 1 may include a hardware element (including a circuit), a software element (including computer codes stored on a computer-readable medium), or a combination of the hardware element and the software element. It is to be pointed out that FIG. 1 is only one example of a specific example and aims at showing the types of components which can exist in the above computer device (or the mobile device).

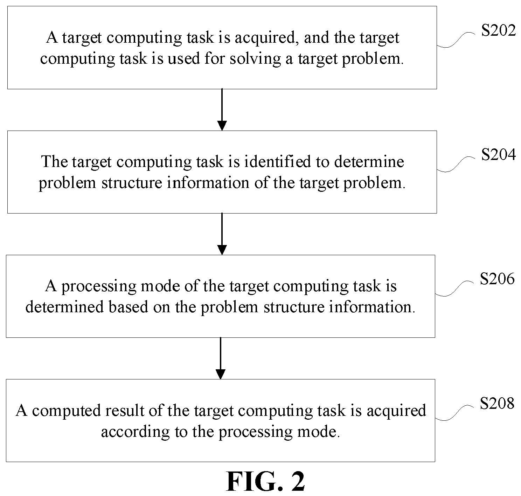

Under the above operating environment, the present invention provides a method for processing a computing task as shown in FIG. 2. FIG. 2 is a flowchart of a method for processing a computing task according to an embodiment of the present invention. As shown in FIG. 2, the method for processing a computing task includes:
step S202: a target computing task is acquired, where the target computing task is used for solving a target problem;
step S204: the target computing task is identified to determine problem structure information of the target problem;
step S206: a processing mode of the target computing task is determined based on the problem structure information; and
step S208: a computed result of the target computing task is acquired according to the processing mode.

In this embodiment of the present invention, the target computing task may be a numerical computing task in technical fields such as cloud computing, finance, transportation, manufacturing and energy. The target computing task can be used for solving a target problem. The target problem may be a numerical problem in technical fields such as cloud computing, finance, transportation, manufacturing and energy. The problem structure information of the target problem can be determined by identifying the target computing task. The more difficult the target computing task is and the more complex the problem structure information of the target problem is, the greater the amount of computing resources to be used by the computing task.

Optionally, the processing mode of the above target computing task may be local solving, remote solving or simultaneous local and remote solving. The processing mode of the target computing task can be determined based on the problem structure information of the above target problem. Thus, a computed result of the target computing task can be acquired according to the processing mode.

In this embodiment of the present invention, first, a target computing task is acquired, where the target computing task is used for solving a target problem; problem structure information of the target problem is determined by identifying the target computing task; a method of determining a processing mode of the target computing task based on the problem structure information is used; and a computed result of the target computing task is acquired according to the processing mode.

It is easy to notice that through this embodiment of the present application, the target computing task is identified and the problem structure information of the target problem is acquired, thereby determining the processing mode of the target computing task. The processing mode may be local solving, remote solving or simultaneous solving. As a result, the purpose of enabling the solver to automatically select a processing mode according to the problem structure information of the target problem is achieved to realize the technical effects of integrating the advantages of local solving and remote solving and improving the flexibility of the solving process of the solver, thereby solving the technical problem in the prior art that a method of fixing a processing mode of a solver to local solving or remote solving is poor in flexibility of a solving process.

In an optional embodiment, in step S204, the process of identifying the target computing task and determining the problem structure information of the target problem includes the following method steps:
step S241: the target computing task is identified to determine a target optimization model corresponding to the target computing task, where the target optimization model is used for modeling the target computing task into a target form to be solved;
step S242: feature information of the target optimization model is acquired, where the feature information is used for representing the computing content corresponding to the target computing task; and
step S243: the problem structure information is determined based on the feature information.

In the above optional embodiment, the target computing task may be a numerical computing task in technical fields such as cloud computing, finance, transportation, manufacturing and energy. The above target optimization model corresponding to the target computing task can be determined by identifying the target computing task. The target optimization model can be used for modeling the target computing task into a target form to be solved.

For example, the above target computing task may be a mathematical programming problem Q1. The above target optimization model may be an API for modeling, denoted as API01. Through the API01, the mathematical programming problem Q1 can be modeled into a form that can be understood by a program of a solver R1 (equivalent to the above target form).

In the above optional embodiment, the feature information of the above target optimization model is acquired. The feature information can be used for representing the computing content corresponding to the above target computing task, and may include but is not limited to the number of variables, the number of constraints, the number of non-zero elements, etc. The problem structure information of the target problem can be determined based on the feature information.

For example, the above target computing task may be the mathematical programming problem Q 1, and the feature information of the corresponding target optimization model API01 includes the number n1 of variables, the number n2 of constraints, and the number n3 of non-zero elements, where the number n1 of variables is used for representing the number of variables involved in the computing process of the mathematical programming problem Q1; the number n2 of constraints is used for representing the number of constraint conditions involved in the computing process of the mathematical programming problem Q1; and the number n3 of non-zero elements is used for representing the complexity of the data determinant involved in the computing process of the mathematical programming problem Q1. Problem structure information A1 corresponding to the mathematical programming problem Q 1 can be computed by a preset relational expression based on the number n1 of variables, the number n2 of constraints and the number n3 of non-zero elements.

In an optional embodiment, in step S206, the process of determining the processing mode of the target computing task based on the problem structure information includes the following method steps:
step S261: the amount of computing resources of the target computing task is determined based on the problem structure information;
step S262: it is determined that the processing mode of the target computing task is a local processing mode when the amount of computing resources meets a first preset condition;
step S263: it is determined that the processing mode of the target computing task is a remote processing mode when the amount of computing resources meets a second preset condition; and
step S264: it is determined that the processing mode of the target computing task is simultaneous use of the local processing mode and the remote processing mode when the amount of computing resources meets a third preset condition.

In the above optional embodiment, the target computing task may be a numerical computing task in technical fields such as cloud computing, finance, transportation, manufacturing and energy. The target computing task can be used for solving a target problem. The target problem may be a numerical problem in technical fields such as cloud computing, finance, transportation, manufacturing and energy. The amount of computing resources of the above target computing task can be determined based on the problem structure information of the above target problem. The more difficult the target computing task is and the more complex the problem structure information of the target problem is, the greater the amount of computing resources to be used by the computing task.

In the above optional embodiment, the above first preset condition may be that the amount of computing resources of the target computing task is lower than a lower preset threshold. When the amount of computing resources meets the first preset condition, it indicates that there are less resources required for executing the target computing task, and thus, the processing mode of the target computing task can be set to the local processing mode. The local processing mode can use a corresponding solver on a local device to solve the computing content corresponding to the target computing task.

In the above optional embodiment, the above second preset condition may be that the amount of computing resources of the target computing task is higher than a higher preset threshold. When the amount of computing resources meets the second preset condition, it indicates that there are more resources required for executing the target computing task, and thus, the processing mode of the target computing task can be set to the remote processing mode. The remote processing mode can use a corresponding solver on a remote server to solve the computing content corresponding to the target computing task.

In the above optional embodiment, the above third preset condition may be that the amount of computing resources of the target computing task does not meet the first preset condition and also does not meet the second preset condition. When the third preset condition is met, it indicates that it is difficult to determine the amount of resources required for executing the target computing task. Thus, the processing mode of the target computing task can be set to simultaneous use of the local processing mode and the remote processing mode.

It is to be noted that in actual application scenarios in technical fields such as cloud computing, finance, transportation, manufacturing and energy, the computing performance of the local device is usually lower than the computing performance of the remote server. Therefore, computing tasks that require few resources are more suitable for computing on the local device to save the data transmission time, and computing tasks that require more resources are more suitable for computing on the remote server to save the solving computation time. In particular, the computing task, the required resources of which cannot be determined, can perform the computation simultaneously on the local device and the remote server, and then, the firstly obtained computed result is acquired to save the time.

In an optional embodiment, the method for processing a computing task further includes the following method steps:
step S210: the current network connection status information is acquired, where the network connection status information is used for determining whether the current network connection is abnormal; and
step S212: switching is preformed between multiple processing modes based on the network connection status information, where the multiple processing modes include:
   the local processing mode,
   the remote processing mode, and
   simultaneous use of the local processing mode and the remote processing mode.

In the above optional embodiment, the current network connection status information can be used for determining whether the current network connection of the current device is abnormal. The network connection status may be that the remote network is connected, the remote network is not connected, etc. Switching is performing between multiple processing modes can be in the process for processing a computing task according to the network connection status information.

Optionally, the above multiple processing modes may include: a local processing mode which can use a corresponding solver on a local device to solve the computing content corresponding to the target computing task; a remote processing mode which can use a corresponding solver on a remote server to solve the computing content corresponding to the target computing task; and simultaneous use of the local processing mode and the remote processing mode.

In an optional embodiment, the method for processing a computing task further includes the following method step:
step S214: when the local processing mode and the remote processing mode are simultaneously used and the computed result is acquired in any one of the local processing mode and the remote processing mode, the other one of the local processing mode and the remote processing mode is ended.

In the above optional embodiment, when the amount of computing resources of the target computing task meets the third preset condition, it indicates that it is difficult to determine the amount of resources required for executing the target computing task. In this case, the following racing mechanism can be used: the local processing mode and the remote processing mode are simultaneously used; and when the computed result is acquired in any one of the local processing mode and the remote processing mode, the computed result is directly acquired, and the other one of the local processing mode and the remote processing mode is ended.

For example, when it is difficult to determine the amount of resources required for executing the mathematical programming problem Q1, the computation is performed for the mathematical programming problem Q1 on the local device and the remote server simultaneously. If the local device obtains the computed result first, the computed result is acquired, and the computation on the remote server is stopped; and if the remote server returns the computed result first, the computed result is acquired, and the computation on the local device is stopped.

In an optional embodiment, the method for processing a computing task further includes the following method steps:
step S216: whether the target computing task is set with parameter information corresponding to the remote processing mode is determined; and
step S218: it is determined that the processing mode includes the remote processing mode when the target computing task is set with the parameter information.

In the above optional embodiment, the target computing task may be a numerical computing task in technical fields such as cloud computing, finance, transportation, manufacturing and energy. The target computing task may be set with multiple parameter information (such as processing mode information, processing time limit information and task type information).

In the above optional embodiment, before the corresponding processing mode of the target computing task is determined based on the problem structure information of the target problem, it is necessary to determine whether the target computing task is set with the parameter information corresponding to the remote processing mode. If the target computing task is set with the parameter information corresponding to the remote processing mode, the processing mode of the target computing task may be set to the local processing mode, the remote processing mode or simultaneous use of the local processing mode and the remote processing mode according to the problem structure information. If the target computing task is not set with the parameter information corresponding to the remote processing mode, the processing mode of the target computing task may be set to the local processing mode.

In an optional embodiment, the method for processing a computing task further includes the following method steps:
step S220: a solver corresponding to the processing mode and an optimization parameter corresponding to the solver are determined, where the optimization parameter is used for controlling the behavior of the solver; and
step S222: the optimization parameter is used for controlling the solver to acquire the computed result.

In the above optional embodiment, for the processing mode of the target computing task, the solver corresponding to the processing mode and the optimization parameter corresponding to the solver can be determined. The optimization parameter can be used for controlling the solver to acquire the computed result of the target computing task.

For example, if it is determined that the processing mode of the computing task Q2 is a local processing mode according to the problem structure information of a computing task Q2, a solver R2 for local processing, corresponding to the computing task Q2, can be determined, and an optimization parameter c2 corresponding to the solver can be determined. Then, the optimization parameter c2 can be used on a local device to control the solver R2 to acquire a computed result R2 of the computing task Q2.

For another example, if it is determined that the processing mode of the computing task Q3 is a remote processing mode according to the problem structure information of a computing task Q3, a solver R3 for remote processing, corresponding to the computing task Q3, can be determined, and an optimization parameter c3 corresponding to the solver can be determined. Then, the optimization parameter c3 can be used on a remote server to control the solver R3 to acquire a computed result R3 of the computing task Q3.

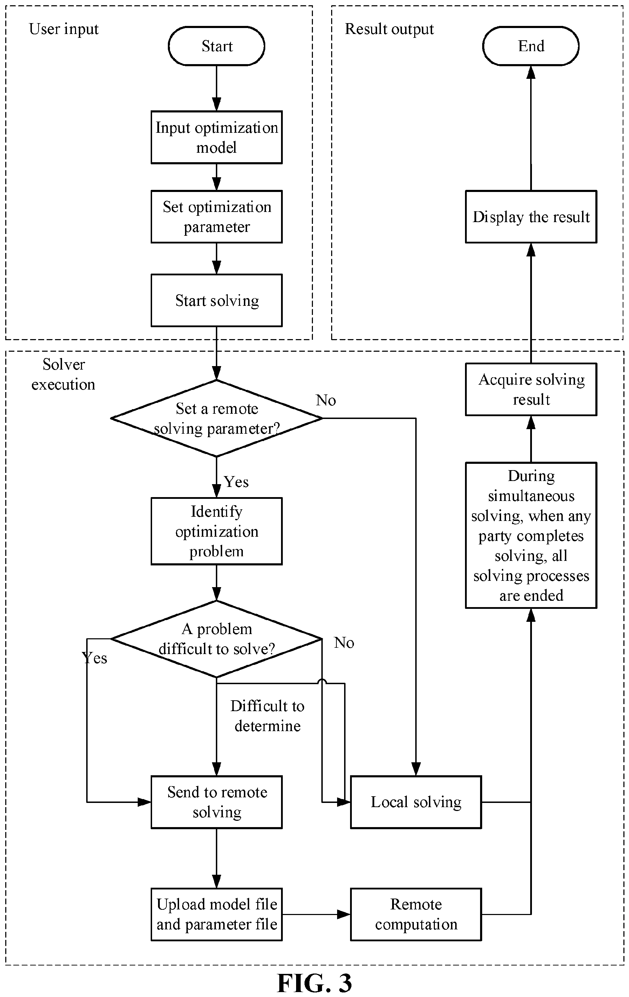

FIG. 3 is a schematic diagram of an optional process for processing a computing task according to an embodiment of the present invention. As shown in FIG. 3, the processing for a computing task may include three parts: user input, solver execution and result output. In particular, in the section of solver execution, automatic selection of the processing mode corresponding to the computing task is performed through two judgments: "whether to set a remote solving parameter" and "whether it is a problem difficult to solve". A solving result outputted by a solver is displayed to a user through a result output part.

Specifically, as shown in FIG. 3, in the section of user input, the user needs to perform the following operations: an optimization model is inputted, where the optimization model may be an API for modeling; and an optimization parameter is set, where the optimization parameter is used for controlling the behavior of the solver to optimize the solving process.

Specifically, as shown in FIG. 3, in the section of solver execution, "whether to set a remote solving parameter" is determined first. For a computing task which is not set with a remote solving parameter, local solving is performed directly. For a computing task which is set with a remote solving parameter, an optimization problem corresponding to the computing task is identified. The identification process may include the following method steps:
step 1: a computing task is acquired, an API for modeling, corresponding to the computing task, is determined from an optimization model inputted by a user;
step 2: the API for modeling, corresponding to the computing task, is used for modeling the computing task into a form to be solved that can be identified by the solver;
step 3: feature information of the API for modeling, corresponding to the computing task, is acquired; and
step 4: the amount of computing resources of the computing task is determined based on the feature information.

The amount of computing resources of the computing task can be obtained through the above method steps, thereby judging whether the computing task belongs to a problem difficult to solve. If the computing task belongs to a problem difficult to solve, the computing task is sent to remote solving, a model file and a parameter file are uploaded to a remote server, and then, the computation is performed on the remote server. If the computing task does not belong to a problem difficult to solve, computation is performed directly on a local device. If it is impossible to determine whether the computing task belongs to a problem difficult to solve, the computing task is simultaneously sent to the local device and the remote server for solving. In particular, during simultaneous solving, when any party completes solving, all solving processes are ended. The firstly acquired solving result is outputted to the user.

It is to be noted that the feature information for identifying the optimization problem may include but is not limited to the data size, the number of variables, the number of constraints, the number of non-zero elements, etc. The method provided in this embodiment can be used for a client and server architecture, and a SolveProblem API for local solving is embedded with an API for remote solving (including a submitTask API for submitting a problem and a retrieve Task API for acquiring a result), so that the API for local solving and the API for remote solving are unified to achieve automatic selection of the processing mode of the computing task.

Through the method provided in this embodiment, the API for local solving and the API for remote solving can be unified, then, the amount of computing resources to be used is acquired by identifying the target computing task, and the local processing mode, the remote processing mode or the simultaneous local and remote processing mode is automatically determined based on this, thereby avoiding the problem that the user needs to perform manual selection when processing the computing task.

In an optional embodiment, a graphical user interface is provided by a terminal device, the content displayed in the graphical user interface at least partially includes a computing task solving scenario, and the method for processing a computing task further includes the following method steps:
step S302: a plurality of candidate optimization models are displayed in the graphical user interface;
step S304: a target optimization model is determined from the plurality of candidate optimization models in response to a first control operation acting on the graphical user interface;
step S306: an optimization parameter associated with the target optimization model is set in response to a second control operation acting on the target optimization model; and
step S308: the computed result is acquired based on the target optimization model and the optimization parameter in response to a third control operation acting on a target control, and the computed result is displayed in the graphical user interface.

In the above optional embodiment, a user can at least partially obtain the above computing task solving scenario through the content in the graphical user interface displayed through an electronic apparatus. The user can perform the above first control operation, the above second control operation and the above third control operation in the computing task solving scenario. A plurality of candidate optimization models can be displayed in the above graphical user interface.

Specifically, in the above graphical user interface, the user can perform the first control operation on the graphical user interface, that is, the user can determine the target optimization model by controlling part of the plurality of candidate optimization models displayed in the graphical user interface.

Specifically, in the above graphical user interface, the user can perform the second control operation on the target optimization model, that is, the user can set the above optimization parameter of the target optimization model by controlling control buttons (such as a setting button and an association button) corresponding to the target optimization model. The optimization parameter can be used for controlling the solver to acquire the computed result of the target computing task.

Specifically, in the above graphical user interface, the user can perform the third control operation on the target control, that is, the user can acquire the above computed result based on the above target optimization model and the above optimization parameter by controlling trigger buttons (such as a computation starting button and a result acquiring button) corresponding to the computing process, and the computed result is displayed to the user through the graphical user interface.

In particular, the above first control operation, the above second control operation and the above third control operation may be touch operations. The touch operation refers to the user touching the display screen of the above terminal device with a finger and controlling the terminal device. The touch operation may include single-point touch or multi-point touch, where the touch operation of each touch point may include clicking, long-pressing, re-pressing, swiping, or the like. The above first control operation, the above second control operation and the above third control operation may also be control operations implemented through input devices such as a mouse and a keyboard.

In an optional embodiment, the method for processing a computing task further includes the following method steps:
step S310: the parameter content of the optimization parameter is adjusted in response to a fourth control operation acting on the optimization parameter to obtain an adjusted result; and
step S312: the computed result is updated based on the adjusted result.

In the above optional embodiment, the user can also perform the fourth control operation on the optimization parameter in the graphical user interface, that is, the user can adjust the parameter content of the optimization parameter by controlling controls (such as an adjusting button and an adjusting control bar) related to the parameter content of the optimization parameter, thereby obtaining the adjusted result. The adjusted result can be used for updating the computed result.

In particular, the above fourth control operation may be a touch operation. The touch operation refers to the user touching the display screen of the above terminal device with a finger and controlling the terminal device. The touch operation may include single-point touch or multi-point touch, where the touch operation of each touch point may include clicking, long-pressing, re-pressing, swiping, or the like. The above fourth control operation may also be a control operation implemented through input devices such as a mouse and a keyboard.

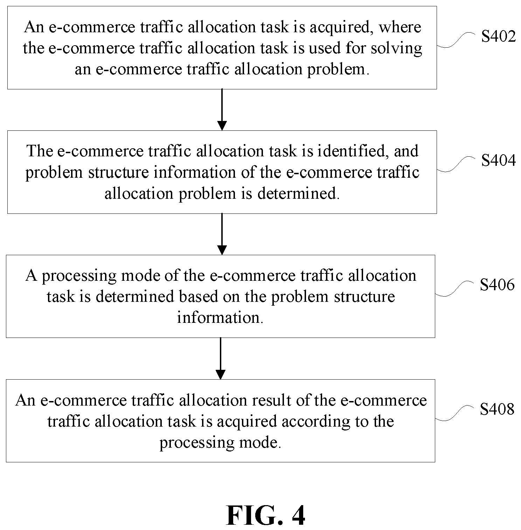

Under the above operating environment, the present invention provides a method for processing a computing task as shown in FIG. 4. FIG. 4 is a flowchart of another method for processing a computing task according to an embodiment of the present invention. As shown in FIG. 4, the method for processing a computing task includes:
step S402: an e-commerce traffic allocation task is acquired, where the e-commerce traffic allocation task is used for solving an e-commerce traffic allocation problem;
step S404: the e-commerce traffic allocation task is identified to determine problem structure information of the e-commerce traffic allocation problem;
step S406: a processing mode of the e-commerce traffic allocation task is determined based on the problem structure information; and
step S408: an e-commerce traffic allocation result of the e-commerce traffic allocation task is acquired according to the processing mode.

In this embodiment of the present invention, the e-commerce traffic allocation task is a computing task for allocating online passenger traffic in actual e-commerce application scenarios. The e-commerce traffic allocation task can be used for solving an e-commerce traffic allocation problem. The e-commerce traffic allocation problem may be a numerical problem related to online passenger traffic allocation in actual e-commerce application scenarios. The problem structure information of the e-commerce traffic allocation problem can be determined by identifying the e-commerce traffic allocation task. The more difficult the e-commerce traffic allocation task is and the more complex the problem structure information of the e-commerce traffic allocation problem is, the greater the amount of the corresponding computing resources to be used.

Optionally, the processing mode of the above e-commerce traffic allocation task may be local solving, remote solving or simultaneous local and remote solving. The processing mode of the e-commerce traffic allocation task can be determined based on the problem structure information of the e-commerce traffic allocation problem. Thus, an e-commerce traffic allocation result of the e-commerce traffic allocation task can be acquired according to the processing mode.

In this embodiment of the present invention, first, an e-commerce traffic allocation task is acquired, where the e-commerce traffic allocation task is used for solving an e-commerce traffic allocation problem; problem structure information of the e-commerce traffic allocation problem is determined by identifying the e-commerce traffic allocation task; a method of determining a processing mode of the e-commerce traffic allocation task based on the problem structure information is used; and an e-commerce traffic allocation result of the e-commerce traffic allocation task is acquired according to the processing mode.

It is easy to notice that through this embodiment of the present application, the e-commerce traffic allocation task is identified and the problem structure information of the e-commerce traffic allocation problem is acquired, thereby determining the processing mode of the e-commerce traffic allocation task. The processing mode may be local solving, remote solving or simultaneous solving. As a result, the purpose of enabling the solver to automatically select a processing mode according to the problem structure information of the e-commerce traffic allocation problem is achieved to realize the technical effects of integrating the advantages of local solving and remote solving and improving the flexibility of the solving process of the solver, thereby solving the technical problem in the prior art that a method of fixing a processing mode of a solver to local solving or remote solving is poor in flexibility of a solving process.

In an optional embodiment, a graphical user interface is provided by a terminal device, the content displayed in the graphical user interface at least partially includes an e-commerce traffic allocation scenario, and the method for processing a computing task further includes the following method steps:
step S410: a plurality of candidate e-commerce traffic allocation models are displayed in the graphical user interface;
step S412: a target e-commerce traffic allocation model is determined from the plurality of candidate e-commerce traffic allocation models in response to a first control operation acting on the graphical user interface;
step S414: an e-commerce traffic allocation parameter associated with the target e-commerce traffic allocation model is set in response to a second control operation acting on the target e-commerce traffic allocation model; and
step S416: the e-commerce traffic allocation result is acquired based on the target e-commerce traffic allocation model and the e-commerce traffic allocation parameter in response to a third control operation acting on a target control, and the e-commerce traffic allocation result is displayed in the graphical user interface.

In the above optional embodiment, a user can at least partially obtain the above e-commerce traffic allocation scenario through the content in the graphical user interface displayed through an electronic apparatus. The user can perform the above first control operation, the above second control operation and the above third control operation in the e-commerce traffic allocation scenario. A plurality of candidate e-commerce traffic allocation models can be displayed in the above graphical user interface.

Specifically, in the above graphical user interface, the user can perform the first control operation on the graphical user interface, that is, the user can determine the target e-commerce traffic allocation model by controlling part of the plurality of candidate e-commerce traffic allocation models displayed in the graphical user interface.

Specifically, in the above graphical user interface, the user can perform the second control operation on the target e-commerce traffic allocation model, that is, the user can set the above e-commerce traffic allocation parameter of the target e-commerce traffic allocation model by controlling control buttons (such as a parameter setting button and a parameter association button) corresponding to the target e-commerce traffic allocation model. The e-commerce traffic allocation parameter can be used for controlling the target e-commerce traffic allocation model to acquire the above e-commerce traffic allocation result.

Specifically, in the above graphical user interface, the user can perform the third control operation on the target control, that is, the user can acquire the above computed result based on the above target optimization model and the above optimization parameter by controlling trigger buttons (such as an allocation starting button and an allocation result acquiring button) corresponding to the e-commerce traffic allocation process, and the computed result is displayed to the user through the graphical user interface.

In particular, the above first control operation, the above second control operation and the above third control operation may be touch operations. The touch operation refers to the user touching the display screen of the above terminal device with a finger and controlling the terminal device. The touch operation may include single-point touch or multi-point touch, where the touch operation of each touch point may include clicking, long-pressing, re-pressing, swiping, or the like. The above first control operation, the above second control operation and the above third control operation may also be control operations implemented through input devices such as a mouse and a keyboard.

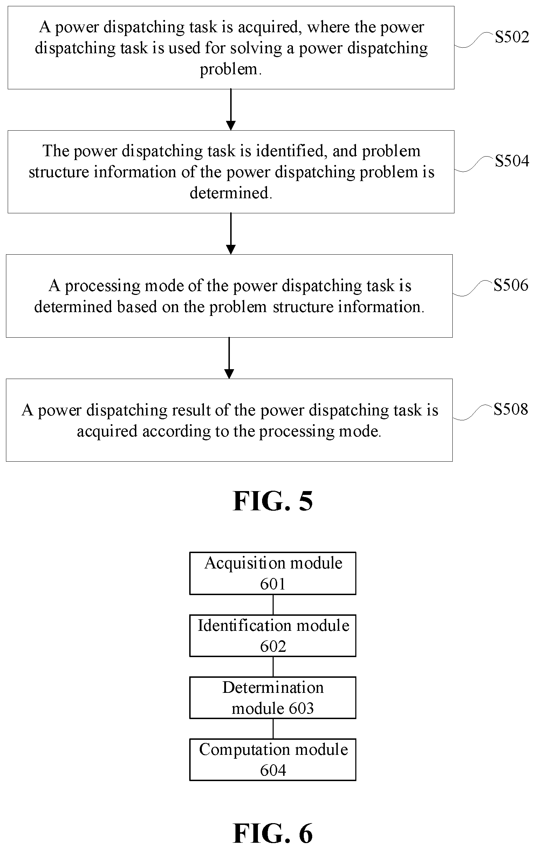

Under the above operating environment, the present invention provides a method for processing a computing task as shown in FIG. 5. FIG. 5 is a flowchart of still another method for processing a computing task according to an embodiment of the present invention. As shown in FIG. 5, the method for processing a computing task includes:
step S502: a power dispatching task is acquired, where the power dispatching task is used for solving a power dispatching problem;
step S504: the power dispatching task is identified to determine problem structure information of the power dispatching problem;
step S506: a processing mode of the power dispatching task is determined based on the problem structure information; and
step S508: a power dispatching result of the power dispatching task is acquired according to the processing mode.

In this embodiment of the present invention, the power dispatching task may be a computing task for dispatching power output or power stock in scenarios such as power production and power sales. The power dispatching task can be used for solving a power dispatching problem. The power dispatching problem may be a numerical problem related to dispatching of power output or power stock in scenarios such as power production and power sales. The problem structure information of the power dispatching problem can be determined by identifying the power dispatching task. The more difficult the power dispatching task is and the more complex the problem structure information of the power dispatching problem is, the greater the amount of the corresponding computing resources to be used.

Optionally, the processing mode of the above power dispatching task may be local solving, remote solving or simultaneous local and remote solving. The processing mode of the power dispatching task can be determined based on the problem structure information of the above power dispatching problem. Thus, a power dispatching result of the power dispatching task can be acquired according to the processing mode.

In this embodiment of the present invention, first, a power dispatching task is acquired, where the power dispatching task is used for solving a power dispatching problem; problem structure information of the power dispatching problem is determined by identifying the power dispatching task; a method of determining a processing mode of the power dispatching task based on the problem structure information is used; and a power dispatching result of the power dispatching task is acquired according to the processing mode.

It is easy to notice that through this embodiment of the present application, the power dispatching task is identified and the problem structure information of the power dispatching problem is acquired, thereby determining the processing mode of the power dispatching task. The processing mode may be local solving, remote solving or simultaneous solving. As a result, the purpose of enabling the solver to automatically select a processing mode according to the problem structure information of the power dispatching problem is achieved to realize the technical effects of integrating the advantages of local solving and remote solving and improving the flexibility of the solving process of the solver, thereby solving the technical problem in the prior art that a method of fixing a processing mode of a solver to local solving or remote solving is poor in flexibility of a solving process.

In an optional embodiment, in step S504, the process of identifying the power dispatching task and determining the problem structure information of the power dispatching problem includes the following method steps:
step S541: the power dispatching task is identified to determine a target optimization model corresponding to the power dispatching task, where the target optimization model is used for modeling the power dispatching task into a target form to be solved;
step S542: feature information of the target optimization model is acquired, where the feature information is used for representing the computing content corresponding to the power dispatching task; and
step S543: the problem structure information is determined based on the feature information.

In the above optional embodiment, the power dispatching task may be a computing task for dispatching power output or power stock in scenarios such as power production and power sales. The above target optimization model corresponding to the power dispatching task can be determined by identifying the power dispatching task. The target optimization model can be used for modeling the power dispatching task into a target form to be solved.

For example, the above power dispatching task may be a mathematical programming problem Q21. The above target optimization model may be an API for modeling, denoted as API201. Through the API201, the mathematical programming problem Q21 can be modeled in a form that can be understood by a program of a solver R1 (equivalent to the above target form).

In the above optional embodiment, the feature information of the above target optimization model is acquired. The feature information can be used for representing the computing content corresponding to the above power dispatching task, and may include but is not limited to the number of variables, the number of constraints, the number of non-zero elements, etc. The problem structure information of the power dispatching problem can be determined based on the feature information.

For example, the above power dispatching task may be the mathematical programming problem Q21, and the feature information of the corresponding target optimization model API201 includes the number n21 of variables, the number n22 of constraints, and the number n23 of non-zero elements, where the number n21 of variables is used for representing the number of variables involved in the computing process of the mathematical programming problem Q21; the number n22 of constraints is used for representing the number of constraint conditions involved in the computing process of the mathematical programming problem Q21; and the number n23 of non-zero elements is used for representing the complexity of the data determinant involved in the computing process of the mathematical programming problem Q21. Problem structure information A21 corresponding to the mathematical programming problem Q21 can be computed by a preset relational expression based on the number n21 of variables, the number n22 of constraints and the number n23 of non-zero elements.

In an optional embodiment, in step S506, the process of determining the processing mode of the power dispatching task based on the problem structure information includes the following method steps:
step S561: the amount of computing resources of the power dispatching task is determined based on the problem structure information;
step S562: it is determined that the processing mode of the power dispatching task is a local processing mode when the amount of computing resources meets a first preset condition;
step S563: it is determined that the processing mode of the power dispatching task is a remote processing mode when the amount of computing resources meets a second preset condition; and
step S564: it is determined that the processing mode of the power dispatching task is simultaneous use of the local processing mode and the remote processing mode when the amount of computing resources meets a third preset condition.

In the above optional embodiment, the power dispatching task is a computing task for dispatching power output or power stock in scenarios such as power production and power sales. The power dispatching task can be used for solving a power dispatching problem. The power dispatching problem may be a numerical problem related to dispatching of power output or power stock in scenarios such as power production and power sales. The amount of computing resources of the above power dispatching task can be determined based on the problem structure information of the above power dispatching problem. The more difficult the power dispatching task is and the more complex the problem structure information of the power dispatching problem is, the greater the amount of the computing resources to be used by the power dispatching task.

In the above optional embodiment, the above first preset condition may be that the amount of computing resources of the power dispatching task is lower than a lower preset threshold. When the amount of computing resources meets the first preset condition, it indicates that there are less resources required for executing the power dispatching task, and thus, the processing mode of the power dispatching task can be set to the local processing mode. The local processing mode can use a corresponding solver on a local device to solve the computing content corresponding to the power dispatching task.

In the above optional embodiment, the above second preset condition may be that the amount of computing resources of the power dispatching task is higher than a higher preset threshold. When the amount of computing resources meets the second preset condition, it indicates that there are more resources required for executing the power dispatching task, and thus, the processing mode of the power dispatching task can be set to the remote processing mode. The remote processing mode can use a corresponding solver on a remote server to solve the computing content corresponding to the power dispatching task.

In the above optional embodiment, the above third preset condition may be that the amount of computing resources of the power dispatching task does not meet the first preset condition and also does not meet the second preset condition. When the third preset condition is met, it indicates that it is difficult to determine the amount of resources required for executing the power dispatching task. Thus, the processing mode of the power dispatching task can be set to simultaneous use of the local processing mode and the remote processing mode.

It is to be noted that in actual application scenarios of power dispatching, the computing performance of the local device is usually lower than the computing performance of the remote server. Therefore, computing tasks that require few resources are more suitable for computing on the local device to save the data transmission time, and computing tasks that require more resources are more suitable for computing on the remote server to save the solving computation time. In particular, the computing task, the required resources of which cannot be determined, can perform the computation simultaneously on the local device and the remote server, and then, the firstly obtained power dispatching result is acquired to save the time.

In an optional embodiment, the method for processing a computing task further includes the following method steps:
step S510: the current network connection status information is acquired, where the network connection status information is used for determining whether the current network connection is abnormal; and
step S512: switching is preformed between multiple processing modes based on the network connection status information, where the multiple processing modes include:
   the local processing mode,
   the remote processing mode, and
   simultaneous use of the local processing mode and the remote processing mode.

In the above optional embodiment, the current network connection status information can be used for determining whether the current network connection of the current device is abnormal. The network connection status may be that the remote network is connected, the remote network is not connected, etc. Switching is preformed between multiple processing modes in the process for processing a power dispatching task according to the network connection status information.

Optionally, the above multiple processing modes may include: a local processing mode which can use a corresponding solver on a local device to solve the computing content corresponding to the power dispatching task; a remote processing mode which can use a corresponding solver on a remote server to solve the computing content corresponding to the power dispatching task; and simultaneous use of the local processing mode and the remote processing mode.

In an optional embodiment, the method for processing a computing task further includes the following method step:
step S514: when the local processing mode and the remote processing mode are simultaneously used and the power dispatching result is acquired in any one of the local processing mode and the remote processing mode, the other one of the local processing mode and the remote processing mode is ended.

In the above optional embodiment, when the amount of computing resources of the power dispatching task meets the third preset condition, it indicates that it is difficult to determine the amount of resources required for executing the power dispatching task. In this case, the following racing mechanism can be used: the local processing mode and the remote processing mode are simultaneously used; and when the power dispatching result is acquired in any one of the local processing mode and the remote processing mode, the power dispatching result is directly acquired, and the other one of the local processing mode and the remote processing mode is ended.

For example, when it is difficult to determine the amount of resources required for executing the mathematical programming problem Q21, the computation is performed for the mathematical programming problem Q21 on the local device and the remote server simultaneously. If the local device obtains the power dispatching result first, the power dispatching result is acquired, and the computation on the remote server is stopped; and if the remote server returns the power dispatching result first, the power dispatching result is acquired, and the computation on the local device is stopped.

In an optional embodiment, the method for processing a computing task further includes the following method steps:
step S516: whether the power dispatching task is set with parameter information corresponding to the remote processing mode is determined; and
step S518: it is determined that the processing mode includes the remote processing mode when the power dispatching task is set with the parameter information.

In the above optional embodiment, the power dispatching task may be a computing task for dispatching power output or power stock in scenarios such as power production and power sales. The power dispatching task may be set with multiple parameter information (such as processing mode information, processing time limit information and task type information).

In the above optional embodiment, before the corresponding processing mode of the power dispatching task is determined based on the problem structure information of the power dispatching problem, it is necessary to determine whether the power dispatching task is set with the parameter information corresponding to the remote processing mode. If the power dispatching task is set with the parameter information corresponding to the remote processing mode, the processing mode of the power dispatching task may be set to the local processing mode, the remote processing mode or simultaneous use of the local processing mode and the remote processing mode according to the problem structure information. If the power dispatching task is not set with the parameter information corresponding to the remote processing mode, the processing mode of the power dispatching task may be set to the local processing mode.

In an optional embodiment, the method for processing a computing task further includes the following method steps:
step S520: a solver corresponding to the processing mode and an optimization parameter corresponding to the solver are determined, where the optimization parameter is used for controlling the behavior of the solver; and
step S522: the optimization parameter is used for controlling the solver to acquire the power dispatching result.

In the above optional embodiment, for the processing mode of the power dispatching task, the solver corresponding to the processing mode and the optimization parameter corresponding to the solver can be determined. The optimization parameter can be used for controlling the solver to acquire the power dispatching result of the power dispatching task.

For example, if it is determined that the processing mode of the power dispatching computing task Q22 is a local processing mode according to the problem structure information of a power dispatching computing task Q22, a solver R2 for local processing, corresponding to the power dispatching computing task Q22, can be determined, and an optimization parameter c22 corresponding to the solver can be determined. Then, the optimization parameter c22 can be used on a local device to control the solver R2 to acquire a power dispatching result R22 of the power dispatching computing task Q22.

For another example, if it is determined that the processing mode of the power dispatching computing task Q23 is a remote processing mode according to the problem structure information of a power dispatching computing task Q23, a solver R23 for remote processing, corresponding to the power dispatching computing task Q23, can be determined, and an optimization parameter c23 corresponding to the solver can be determined. Then, the optimization parameter c23 can be used on a remote server to control the solver R23 to acquire a power dispatching result R23 of the power dispatching computing task Q23.

Through the method provided in this embodiment, the API for local solving and the API for remote solving can be unified, then, the amount of computing resources to be used is acquired by identifying the power dispatching task, and the local processing mode, the remote processing mode or the simultaneous local and remote processing mode is automatically determined based on this, thereby avoiding the problem that the user needs to perform manual selection when processing the computing task.

In an optional embodiment, a graphical user interface is provided by a terminal device, the content displayed in the graphical user interface at least partially includes a power dispatching scenario, and the method for processing a computing task further includes the following method steps:
step S524: a plurality of candidate power dispatching models are displayed in the graphical user interface;
step S526: a target power dispatching model is determined from the plurality of candidate power dispatching models in response to a first control operation acting on the graphical user interface;
step S528: a power dispatching parameter associated with the target power dispatching model is set in response to a second control operation acting on the target power dispatching model; and
step S530: the power dispatching result is acquired based on the target power dispatching model and the power dispatching parameter in response to a third control operation acting on a target control, and the power dispatching result is displayed in the graphical user interface.

In the above optional embodiment, a user can at least partially obtain the above power dispatching scenario through the content in the graphical user interface displayed through an electronic apparatus. The user can perform the above first control operation, the above second control operation and the above third control operation in the power dispatching scenario. A plurality of candidate power dispatching models can be displayed in the above graphical user interface.

Specifically, in the above graphical user interface, the user can perform the first control operation on the graphical user interface, that is, the user can determine the target power dispatching model by controlling part of the plurality of candidate power dispatching models displayed in the graphical user interface.

Specifically, in the above graphical user interface, the user can perform the second control operation on the target power dispatching model, that is, the user can set the above power dispatching parameter of the target power dispatching model by controlling control buttons (such as a setting button and an association button) corresponding to the target power dispatching model. The power dispatching parameter can be used for controlling the solver to acquire the power dispatching result of the power dispatching task.

Specifically, in the above graphical user interface, the user can perform the third control operation on the target control, that is, the user can acquire the above power dispatching result based on the above target power dispatching model and the above power dispatching parameter by controlling trigger buttons (such as a computation starting button and a result acquiring button) corresponding to the computing process, and the power dispatching result is displayed to the user through the graphical user interface.

In particular, the above first control operation, the above second control operation and the above third control operation may be touch operations The touch operation refers to the user touching the display screen of the above terminal device with a finger and controlling the terminal device. The touch operation may include single-point touch or multi-point touch, where the touch operation of each touch point may include clicking, long-pressing, re-pressing, swiping, or the like. The above first control operation, the above second control operation and the above third control operation may also be control operations implemented through input devices such as a mouse and a keyboard.

In an optional embodiment, the method for processing a computing task further includes the following method steps:
step S532: the parameter content of the power dispatching parameter is adjusted in response to a fourth control operation acting on the power dispatching parameter to obtain an adjusted result; and
step S534: the power dispatching result is updated based on the adjusted result.

In the above optional embodiment, the user can also perform the fourth control operation on the power dispatching parameter in the graphical user interface, that is, the user can adjust the parameter content of the power dispatching parameter by controlling controls (such as an adjusting button and an adjusting control bar) related to the parameter content of the power dispatching parameter, thereby obtaining the adjusted result. The adjusted result can be used for updating the power dispatching result.

In particular, the above fourth control operation may be a touch operation. The touch operation refers to the user touching the display screen of the above terminal device with a finger and controlling the terminal device. The touch operation may include single-point touch or multi-point touch, where the touch operation of each touch point may include clicking, long-pressing, re-pressing, swiping, or the like. The above fourth control operation may also be a control operation implemented through input devices such as a mouse and a keyboard.

It is to be noted that for the above method embodiments, for the sake of simple description, they are expressed as a series of action combinations. However, those skilled in the art should know that the present invention is not limited by an order of described actions. According to the present invention, some steps may be performed in other orders or simultaneously. Secondly, those skilled in the art should also know that the embodiments described in the specification belong to preferred embodiments, and the actions and modules involved are not necessarily required by the present invention.

Through the description of the above implementations, those skilled in the art can clearly know that the method according to the above embodiments can be implemented by means of software and a necessary universal hardware platform, and definitely, the method can also be implemented through hardware, but the former is a preferred implementation in many cases. Based on such an understanding, the technical solutions of the present invention essentially, or the part contributing to the prior art, may be presented in the form of a software product. The computer software product is stored in a storage medium (such as a ROM/RAM, a magnetic disk, or an optical disk), and includes several instructions for instructing a terminal device (which may be a mobile phone, a computer, a server, a network device, or the like) to execute the methods described in the embodiments of the present invention.

### Embodiment 2

According to an embodiment of the present invention, an apparatus for implementing the above method for processing a computing task is also provided. FIG. 6 is a schematic structural diagram of an apparatus for processing a computing task according to an embodiment of the present invention. As shown in FIG. 6, the apparatus includes: an acquisition module 601, an identification module 602, a determination module 603 and a computation module 604.

The acquisition module 601 is configured to acquire a target computing task, where the target computing task is used for solving a target problem; the identification module 602 is configured to identify the target computing task, and determine problem structure information of the target problem; the determination module 603 is configured to determine a processing mode of the target computing task based on the problem structure information; and the computation module 604 is configured to acquire a computed result of the target computing task according to the processing mode.

Optionally, the above identification module 602 is further configured to: identify the target computing task, and determine a target optimization model corresponding to the target computing task, where the target optimization model is used for modeling the target computing task into a target form to be solved; acquire feature information of the target optimization model, where the feature information is used for representing the computing content corresponding to the target computing task; and determine the problem structure information based on the feature information.

Optionally, the above determination module 603 is further configured to: determine the amount of computing resources of the target computing task based on the problem structure information; determine that the processing mode of the target computing task is a local processing mode when the amount of computing resources meets a first preset condition; determine that the processing mode of the target computing task is a remote processing mode when the amount of computing resources meets a second preset condition; and determine that the processing mode of the target computing task is simultaneous use of the local processing mode and the remote processing mode when the amount of computing resources meets a third preset condition.

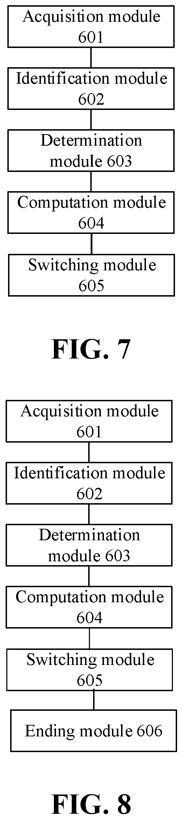

Optionally, FIG. 7 is a schematic structural diagram of another apparatus for processing a computing task according to an embodiment of the present invention. As shown in FIG. 7, in addition to all modules shown in FIG. 6, the apparatus further includes: a switching module 605, configured to acquire the current network connection status information, where the network connection status information is used for determining whether the current network connection is abnormal; and switch between multiple processing modes based on the network connection status information, where the multiple processing modes include: the local processing mode, the remote processing mode, and simultaneous use of the local processing mode and the remote processing mode.

Optionally, FIG. 8 is a schematic structural diagram of still another apparatus for processing a computing task according to an embodiment of the present invention. As shown in FIG. 8, in addition to all modules shown in FIG. 7, the apparatus further includes: an ending module 606, configured to, when the local processing mode and the remote processing mode are simultaneously used and the computed result is acquired in any one of the local processing mode and the remote processing mode, end the other one of the local processing mode and the remote processing mode.

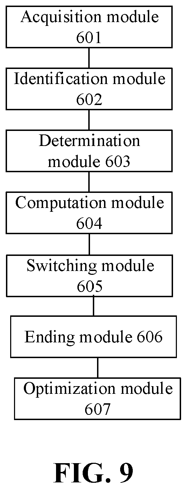

Optionally, FIG. 9 is a schematic structural diagram of yet another apparatus for processing a computing task according to an embodiment of the present invention. As shown in FIG. 9, in addition to all modules shown in FIG. 8, the apparatus further includes: an optimization module 607, configured to determine a solver corresponding to the processing mode and an optimization parameter corresponding to the solver, where the optimization parameter is used for controlling the behavior of the solver; and use the optimization parameter to control the solver to acquire the computed result.

Here, it is to be noted that the above acquisition module 601, identification module 602, determination module 603 and computation module 604 correspond to step S202 to step S208 in Embodiment 1. The examples and application scenarios implemented by the four modules and corresponding steps are the same, but are not limited to the content disclosed in Embodiment 1. It is to be noted that the above modules serving as part of the apparatus can run in the computer terminal 10 provided in Embodiment 1.

In this embodiment of the present invention, first, a target computing task is acquired by the acquisition module, where the target computing task is used for solving a target problem; the target computing task is identified by the identification module, and problem structure information of the target problem is determined; then, a method of determining a processing mode of the target computing task based on the problem structure information by the determination module is used; and thus, a computed result of the target computing task is acquired according to the processing mode by the computation module.

It is easy to notice that through this embodiment of the present application, the target computing task is identified and the problem structure information of the target problem is acquired, thereby determining the processing mode of the target computing task. The processing mode may be local solving, remote solving or simultaneous solving. As a result, the purpose of enabling the solver to automatically select a processing mode according to the problem structure information of the target problem is achieved to realize the technical effects of integrating the advantages of local solving and remote solving and improving the flexibility of the solving process of the solver, thereby solving the technical problem in the prior art that a method of fixing a processing mode of a solver to local solving or remote solving is poor in flexibility of a solving process.

It is to be noted that for the preferred implementation of this embodiment, reference can be made to the relevant description in Embodiment 1, which will not be described again here.

### Embodiment 3

According to an embodiment of the present invention, an electronic apparatus is also provided. The electronic apparatus may be any computing device in a computing device group. The electronic apparatus includes: a processor and a memory.

The memory is connected to the above processor and configured to provide instructions for the above processor to process the following processing steps: a target computing task is acquired, where the target computing task is used for solving a target problem; the target computing task is identified to determine problem structure information of the target problem; a processing mode of the target computing task is determined based on the problem structure information; and a computed result of the target computing task is acquired according to the processing mode.

In this embodiment of the present invention, first, a target computing task is acquired, where the target computing task is used for solving a target problem; problem structure information of the target problem is determined by identifying the target computing task; a method of determining a processing mode of the target computing task based on the problem structure information is used; and a computed result of the target computing task is acquired according to the processing mode.

It is easy to notice that through this embodiment of the present application, the target computing task is identified and the problem structure information of the target problem is acquired, thereby determining the processing mode of the target computing task. The processing mode may be local solving, remote solving or simultaneous solving. As a result, the purpose of enabling the solver to automatically select a processing mode according to the problem structure information of the target problem is achieved to realize the technical effects of integrating the advantages of local solving and remote solving and improving the flexibility of the solving process of the solver, thereby solving the technical problem in the prior art that a method of fixing a processing mode of a solver to local solving or remote solving is poor in flexibility of a solving process.

It is to be noted that for the preferred implementation of this embodiment, reference can be made to the relevant description in Embodiment 1, which will not be described again here.

### Embodiment 4

An embodiment of the present invention may provide a computer terminal. The computer terminal may be any computer terminal device in a computer terminal group. Optionally, in this embodiment, the above computer terminal may also be replaced with a terminal device such as a mobile terminal.

Optionally, in this embodiment, the above computer terminal may be located in at least one of a plurality of network devices in a computer network.

In this embodiment, the above computer terminal can execute program codes of the following steps in the method for processing a computing task: a target computing task is acquired; the target computing task is identified to determine problem structure information of a target problem; a processing mode of the target computing task is determined based on the amount of computing resources; and a computed result of the target computing task is acquired according to the processing mode.

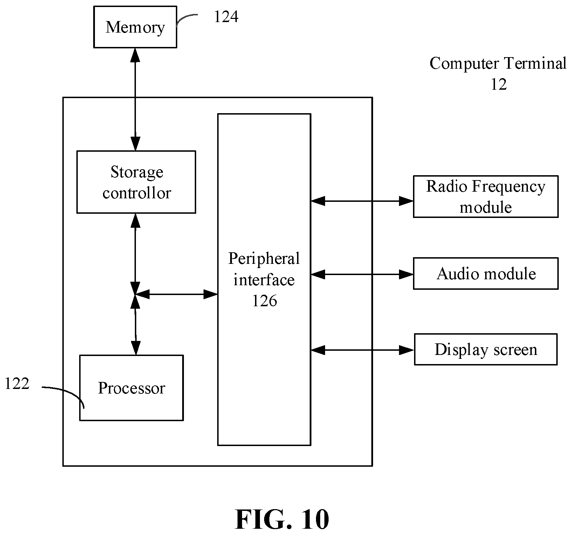

Optionally, FIG. 10 is a structural block diagram of another computer terminal according to an embodiment of the present invention. As shown in FIG. 10, the computer terminal may include: one or a plurality of processors 122 (only one processor 122 is shown in the figure), a memory 124, and a peripheral interface 126.

The memory can be configured to store software programs and modules, such as program instructions/modules corresponding to the method and apparatus for processing a computing task in this embodiment of the present invention. The processor executes various functional applications and data processing by running the software programs and modules stored in the memory, thereby implementing the above method for processing a computing task. The memory may include a high-speed random access memory, and may also include a non-volatile memory, such as one or a plurality of magnetic storage apparatuses, a flash memory, or another non-volatile solid-state memory. In some examples, the memory may further include memories remotely arranged relative to the processor, and the remote memories may be connected to the computer terminal through a network. The examples of the above network include but are not limited to the Internet, Intranet, local area networks, mobile communication networks, and combinations thereof.

The processor can call the information and application programs stored in the memory through the transmission apparatus to execute the following steps: a target computing task is acquired, where the target computing task is used for solving a target problem; the target computing task is identified to determine problem structure information of the target problem is determined; a processing mode of the target computing task based on the problem structure information; and a computed result of the target computing task is acquired according to the processing mode.

Optionally, the above processor can also execute program codes of the following steps: the target computing task is identified to determine a target optimization model corresponding to the target computing task, where the target optimization model is used for modeling the target computing task into a target form to be solved; feature information of the target optimization model is acquired, where the feature information is used for representing the computing content corresponding to the target computing task; and the problem structure information is determined based on the feature information.

Optionally, the above processor can also execute program codes of the following steps: the amount of computing resources of the target computing task is determined based on the problem structure information; it is determined that the processing mode of the target computing task is a local processing mode when the amount of computing resources meets a first preset condition; it is determined that the processing mode of the target computing task is a remote processing mode when the amount of computing resources meets a second preset condition; and it is determined that the processing mode of the target computing task is simultaneous use of the local processing mode and the remote processing mode when the amount of computing resources meets a third preset condition.

Optionally, the above processor can also execute program codes of the following steps: the current network connection status information is acquired, where the network connection status information is used for determining whether the current network connection is abnormal; and switching is preformed between multiple processing modes based on the network connection status information, where the multiple processing modes include: the local processing mode, the remote processing mode, and simultaneous use of the local processing mode and the remote processing mode.

Optionally, the above processor can also execute program codes of the following step: when the local processing mode and the remote processing mode are simultaneously used and the computed result is acquired in any one of the local processing mode and the remote processing mode, the other one of the local processing mode and the remote processing mode is ended.

Optionally, the above processor can also execute program codes of the following steps: a solver corresponding to the processing mode and an optimization parameter corresponding to the solver are determined, where the optimization parameter is used for controlling the behavior of the solver; and the optimization parameter is used for controlling the solver to acquire the computed result.

Optionally, the above processor can also execute program codes of the following steps: a plurality of candidate optimization models are displayed in a graphical user interface; a target optimization model is determined from the plurality of candidate optimization models in response to a first control operation acting on the graphical user interface; an optimization parameter associated with the target optimization model is set in response to a second control operation acting on the target optimization model; and the computed result is acquired based on the target optimization model and the optimization parameter in response to a third control operation acting on a target control, and the computed result is displayed in the graphical user interface.

Optionally, the above processor can also execute program codes of the following steps: the parameter content of the optimization parameter is adjusted in response to a fourth control operation acting on the optimization parameter to obtain an adjusted result; and the computed result is updated based on the adjusted result.

The processor can call the information and application programs stored in the memory through the transmission apparatus to execute the following steps: an e-commerce traffic allocation task is acquired, where the e-commerce traffic allocation task is used for solving an e-commerce traffic allocation problem; the e-commerce traffic allocation task is identified to determine problem structure information of the e-commerce traffic allocation problem; a processing mode of the e-commerce traffic allocation task is determined based on the problem structure information; and an e-commerce traffic allocation result of the e-commerce traffic allocation task is acquired according to the processing mode.

Optionally, the above processor can also execute program codes of the following steps: a plurality of candidate e-commerce traffic allocation models are displayed in a graphical user interface; a target e-commerce traffic allocation model is determined from the plurality of candidate e-commerce traffic allocation models in response to a first control operation acting on the graphical user interface; an e-commerce traffic allocation parameter associated with the target e-commerce traffic allocation model is set in response to a second control operation acting on the target e-commerce traffic allocation model; and the e-commerce traffic allocation result is acquired based on the target e-commerce traffic allocation model and the e-commerce traffic allocation parameter in response to a third control operation acting on a target control, and the e-commerce traffic allocation result is displayed in the graphical user interface.

The processor can call the information and application programs stored in the memory through the transmission apparatus to execute the following steps: a power dispatching task is acquired, where the power dispatching task is used for solving a power dispatching problem; the power dispatching task is identified to determine problem structure information of the power dispatching problem; a processing mode of the power dispatching task is determined based on the problem structure information; and a power dispatching result of the power dispatching task is acquired according to the processing mode.

In this embodiment of the present invention, first, a target computing task is acquired, where the target computing task is used for solving a target problem; problem structure information of the target problem is determined by identifying the target computing task; a method of determining a processing mode of the target computing task based on the problem structure information is used; and a computed result of the target computing task is acquired according to the processing mode.

It is easy to notice that through this embodiment of the present application, the target computing task is identified and the problem structure information of the target problem is acquired, thereby determining the processing mode of the target computing task. The processing mode may be local solving, remote solving or simultaneous solving. As a result, the purpose of enabling the solver to automatically select a processing mode according to the problem structure information of the target problem is achieved to realize the technical effects of integrating the advantages of local solving and remote solving and improving the flexibility of the solving process of the solver, thereby solving the technical problem in the prior art that a method of fixing a processing mode of a solver to local solving or remote solving is poor in flexibility of a solving process.

Those of ordinary skill in the art can understand that the structure shown in FIG. 10 is only schematic. The computer terminal may also be a terminal device such as a smart phone (such as an Android mobile phone or an iOS mobile phone), a tablet computer, a palmtop computer, a mobile Internet device (MID), or a PAD. FIG. 10 does not limit the structure of the above electronic apparatus. For example, the computer terminal may further include more or less components (such as a network interface and a display apparatus) than those shown in FIG. 10, or has configurations different from those shown in FIG. 10.

Those of ordinary skill in the art can understand that all or part of the steps in the various methods of the above embodiments may be completed by instructing the hardware related to the terminal device through a program. The program may be stored in a computer-readable storage medium, and the storage medium may include: a flash disk, a read-only memory (ROM), a random access memory (RAM), a magnetic disk or an optical disk, and the like.

According to an embodiment of the present invention, a computer-readable storage medium is also provided. Optionally, in this embodiment, the above computer-readable storage medium may be configured to store the program codes executed by the method for processing a computing task provided in Embodiment 1.

Optionally, in this embodiment, the above computer-readable storage medium may be located in any computer terminal in a computer terminal group in a computer network, or located in any mobile terminal in a mobile terminal group.

Optionally, in this embodiment, the computer-readable storage medium is configured to store program codes for executing the following steps: a target computing task is acquired, where the target computing task is used for solving a target problem; the target computing task is identified to determine problem structure information of the target problem; a processing mode of the target computing task is determined based on the problem structure information; and a computed result of the target computing task is acquired according to the processing mode.

Optionally, in this embodiment, the computer-readable storage medium is configured to store program codes for executing the following steps: the target computing task is identified to determine a target optimization model corresponding to the target computing task, where the target optimization model is used for modeling the target computing task into a target form to be solved; feature information of the target optimization model is acquired, where the feature information is used for representing the computing content corresponding to the target computing task; and the problem structure information is determined based on the feature information.

Optionally, in this embodiment, the computer-readable storage medium is configured to store program codes for executing the following steps: the amount of computing resources of the target computing task is determined based on the problem structure information; it is determined that the processing mode of the target computing task is a local processing mode when the amount of computing resources meets a first preset condition; it is determined that the processing mode of the target computing task is a remote processing mode when the amount of computing resources meets a second preset condition; and it is determined that the processing mode of the target computing task is simultaneous use of the local processing mode and the remote processing mode when the amount of computing resources meets a third preset condition.

Optionally, in this embodiment, the computer-readable storage medium is configured to store program codes for executing the following steps: the current network connection status information is acquired, where the network connection status information is used for determining whether the current network connection is abnormal; and switching is preformed between multiple processing modes based on the network connection status information, where the multiple processing modes include: the local processing mode, the remote processing mode, and simultaneous use of the local processing mode and the remote processing mode.

Optionally, in this embodiment, the computer-readable storage medium is configured to store program codes for executing the following step: when the local processing mode and the remote processing mode are simultaneously used and the computed result is acquired in any one of the local processing mode and the remote processing mode, the other one of the local processing mode and the remote processing mode is ended.

Optionally, in this embodiment, the computer-readable storage medium is configured to store program codes for executing the following steps: a solver corresponding to the processing mode and an optimization parameter corresponding to the solver are determined, where the optimization parameter is used for controlling the behavior of the solver; and the optimization parameter is used for controlling the solver to acquire the computed result.

Optionally, in this embodiment, the computer-readable storage medium is configured to store program codes for executing the following steps: a plurality of candidate optimization models are displayed in a graphical user interface; a target optimization model is determined from the plurality of candidate optimization models in response to a first control operation acting on the graphical user interface; an optimization parameter associated with the target optimization model is set in response to a second control operation acting on the target optimization model; and the computed result is acquired based on the target optimization model and the optimization parameter in response to a third control operation acting on a target control, and the computed result is displayed in the graphical user interface.

Optionally, in this embodiment, the computer-readable storage medium is configured to store program codes for executing the following steps: the parameter content of the optimization parameter is adjusted in response to a fourth control operation acting on the optimization parameter to obtain an adjusted result; and the computed result is updated based on the adjusted result.

Optionally, in this embodiment, the computer-readable storage medium is configured to store program codes for executing the following steps: an e-commerce traffic allocation task is acquired, where the e-commerce traffic allocation task is used for solving an e-commerce traffic allocation problem; the e-commerce traffic allocation task is identified to determine problem structure information of the e-commerce traffic allocation problem; a processing mode of the e-commerce traffic allocation task is determined based on the problem structure information; and an e-commerce traffic allocation result of the e-commerce traffic allocation task is acquired according to the processing mode.

Optionally, in this embodiment, the computer-readable storage medium is configured to store program codes for executing the following steps: a plurality of candidate e-commerce traffic allocation models are displayed in a graphical user interface; a target e-commerce traffic allocation model is determined from the plurality of candidate e-commerce traffic allocation models in response to a first control operation acting on the graphical user interface; an e-commerce traffic allocation parameter associated with the target e-commerce traffic allocation model is set in response to a second control operation acting on the target e-commerce traffic allocation model; and the e-commerce traffic allocation result is acquired based on the target e-commerce traffic allocation model and the e-commerce traffic allocation parameter in response to a third control operation acting on a target control, and the e-commerce traffic allocation result is displayed in the graphical user interface.

Optionally, in this embodiment, the computer-readable storage medium is configured to store program codes for executing the following steps: a power dispatching task is acquired, where the power dispatching task is used for solving a power dispatching problem; the power dispatching task is identified to determine problem structure information of the power dispatching problem; a processing mode of the power dispatching task is determined based on the problem structure information; and a power dispatching result of the power dispatching task is acquired according to the processing mode.

The serial numbers of the above embodiments of the present invention are for description only, and do not represent the advantages and disadvantages of the embodiments.

In the above embodiments of the present invention, the descriptions of each embodiment have their own emphases, and for parts not described in detail in a certain embodiment, reference may be made to relevant descriptions of other embodiments.

In the embodiments provided in the present application, it is to be understood that the disclosed technical content can be implemented in other ways. The apparatus embodiments described above are only schematic. For example, the division of the units is only a logical function division. In actual implementations, there may be another division manner. For example, a plurality of units or components may be combined or integrated into another system, or some features may be ignored or not implemented. In addition, the displayed or discussed mutual coupling or direct coupling or communication connection may be indirect coupling or communication connection through some interfaces, units or modules, and may be in electrical or other forms.

The units described as separate components may be or may not be physically separated, and the components displayed as units may be or may not be physical units, that is, they may be located in one place or distributed across multiple network units. Some or all of the units may be selected according to actual needs to achieve the purpose of the solution in this embodiment.

In addition, each functional unit in each embodiment of the present invention may be integrated into one processing unit, each unit may separately exist physically, or two or more units may be integrated into one unit. The above integrated unit may be implemented in the form of hardware, or may be implemented in the form of software functional units.

If the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or some of the technical solutions may be presented in the form of a software product. The computer software product is stored in a storage medium, and includes several instructions for instructing a computer device (which may be a personal computer, a server, a network device, or the like) to execute all or some of the steps of the method described in each embodiment of the present invention. The above storage medium includes: various media capable of storing program codes, such as a USB flash disk, a ROM, a RAM, a mobile hard disk, a magnetic disk, and an optical disk.

The above implementations are only preferred implementations of the present invention. It is to be noted that those of ordinary skill in the art can make several improvements and modifications without departing from the principles of the present invention, and these improvements and modifications should also be regarded as within the protection scope of the present invention.

## Claims

1. A method for processing a computing task, comprising:
acquiring a target computing task, wherein the target computing task is used for solving a target problem;
identifying the target computing task to determine problem structure information of the target problem;
determining a processing mode of the target computing task based on the problem structure information; and
acquiring a computed result of the target computing task according to the processing mode.

2. The method according to claim 1, wherein the step of identifying the target computing task, and determining the problem structure information of the target problem comprises:
identifying the target computing task, and determining a target optimization model corresponding to the target computing task, wherein the target optimization model is used for modeling the target computing task into a target form to be solved;
acquiring feature information of the target optimization model, wherein the feature information is used for representing computing content corresponding to the target computing task; and
determining the problem structure information based on the feature information.

3. The method according to claim 1, wherein the step of determining the processing mode of the target computing task based on the problem structure information comprises:
determining an amount of computing resources of the target computing task based on the problem structure information;
determining that the processing mode of the target computing task is a local processing mode when the amount of computing resources meets a first preset condition;
determining that the processing mode of the target computing task is a remote processing mode when the amount of computing resources meets a second preset condition; and
determining that the processing mode of the target computing task is simultaneous use of the local processing mode and the remote processing mode when the amount of computing resources meets a third preset condition.

4. The method according to claim 3, further comprising:
acquiring current network connection status information, wherein the network connection status information is used for determining whether current network connection is abnormal; and
switching between multiple processing modes based on the network connection status information, wherein the multiple processing modes comprise:
the local processing mode,
the remote processing mode, and
simultaneous use of the local processing mode and the remote processing mode.

5. The method according to claim 3, further comprising:
when the local processing mode and the remote processing mode are simultaneously used and the computed result is acquired in any one of the local processing mode and the remote processing mode, ending the other one of the local processing mode and the remote processing mode.

6. The method according to claim 1, wherein the step of acquiring the computed result of the target computing task according to the processing mode comprises:
determining a solver corresponding to the processing mode and an optimization parameter corresponding to the solver, wherein the optimization parameter is used for controlling behavior of the solver; and
using the optimization parameter to control the solver to acquire the computed result.

7. The method according to claim 1, wherein a graphical user interface is provided by a terminal device, content displayed in the graphical user interface at least partially comprises a computing task solving scenario, and the method further comprises:
displaying a plurality of candidate optimization models in the graphical user interface;
determining a target optimization model from the plurality of candidate optimization models in response to a first control operation acting on the graphical user interface;
setting an optimization parameter associated with the target optimization model in response to a second control operation acting on the target optimization model; and
acquiring the computed result based on the target optimization model and the optimization parameter in response to a third control operation acting on a target control, and displaying the computed result in the graphical user interface.

8. The method according to claim 7, further comprising:
adjusting parameter content of the optimization parameter in response to a fourth control operation acting on the optimization parameter to obtain an adjusted result; and
updating the computed result based on the adjusted result.

9. A method for processing a computing task, comprising:
acquiring an e-commerce traffic allocation task, wherein the e-commerce traffic allocation task is used for solving an e-commerce traffic allocation problem;
identifying the e-commerce traffic allocation task to determine problem structure information of the e-commerce traffic allocation problem;
determining a processing mode of the e-commerce traffic allocation task based on the problem structure information; and
acquiring an e-commerce traffic allocation result of the e-commerce traffic allocation task according to the processing mode.

10. The method according to claim 9, wherein a graphical user interface is provided by a terminal device, content displayed in the graphical user interface at least partially comprises an e-commerce traffic allocation scenario, and the method further comprises:
displaying a plurality of candidate e-commerce traffic allocation models in the graphical user interface;
determining a target e-commerce traffic allocation model from the plurality of candidate e-commerce traffic allocation models in response to a first control operation acting on the graphical user interface;
setting an e-commerce traffic allocation parameter associated with the target e-commerce traffic allocation model in response to a second control operation acting on the target e-commerce traffic allocation model; and
acquiring the e-commerce traffic allocation result based on the target e-commerce traffic allocation model and the e-commerce traffic allocation parameter in response to a third control operation acting on a target control, and displaying the e-commerce traffic allocation result in the graphical user interface.

11. A method for processing a computing task, comprising:
acquiring a power dispatching task, wherein the power dispatching task is used for solving a power dispatching problem;
identifying the power dispatching task to determine problem structure information of the power dispatching problem;
determining a processing mode of the power dispatching task based on the problem structure information; and
acquiring a power dispatching result of the power dispatching task according to the processing mode.

12. A system for processing a computing task, comprising:
a processor, and
a memory connected to the processor and configured to provide instructions for the processor to process the following processing steps:
step 1: acquiring a target computing task, wherein the target computing task is used for solving a target problem;
step 2: identifying the target computing task to determine problem structure information of the target problem;
step 3: determining a processing mode of the target computing task based on the problem structure information; and
step 4: acquiring a computed result of the target computing task according to the processing mode.
